**Europäisches Patentamt**

(19) **European Patent Office**

**Office européen des brevets**

(11) Veröffentlichungsnummer: **0 256 038 B1**

(12) # EUROPÄISCHE PATENTSCHRIFT

(45) Veröffentlichungstag der Patentschrift:
**21.11.91 Patentblatt 91/47**

(51) Int. Cl.$^5$: **B25J 15/04, B25J 19/00**

(21) Anmeldenummer: **87900642.7**

(22) Anmeldetag: **10.01.87**

(86) Internationale Anmeldenummer:
**PCT/DE87/00007**

(87) Internationale Veröffentlichungsnummer:
**WO 87/04653 13.08.87 Gazette 87/18**

(54) **ROBOTERARM MIT EINEM ANBAUFLANSCH FÜR WERKZEUGE.**

(30) Priorität: **31.01.86 DE 3602901**
**25.04.86 DE 3613980**

(43) Veröffentlichungstag der Anmeldung:
**24.02.88 Patentblatt 88/08**

(45) Bekanntmachung des Hinweises auf die
Patenterteilung:
**21.11.91 Patentblatt 91/47**

(84) Benannte Vertragsstaaten:
**AT CH DE FR GB IT LI NL SE**

(56) Entgegenhaltungen:
**EP-A- 0 108 657**
**EP-A- 0 154 227**
**AU-B- 492 202**
**FR-A- 2 324 407**
**GB-A- 2 143 205**
**US-A- 4 516 476**
**US-A- 4 561 816**

(73) Patentinhaber: **ROBERT BOSCH GMBH**
**Postfach 50**
**W-7000 Stuttgart 1 (DE)**

(72) Erfinder: **DREXEL, Peter**
**Plieninger Str. 33**
**W-7031 Steinenbronn (DE)**
Erfinder: **ERNE, Hans**
**Kornblumenstr. 15**
**W-7050 Waiblingen 7 (DE)**
Erfinder: **GOSDOWSKI, Gerhard**
**Camberleystr. 83**
**W-7120 Bietigheim-Bissingen (DE)**
Erfinder: **GROSS, Karl, Heinz**
**Eichenweg 17**
**W-7060 Schorndorf (DE)**
Erfinder: **KIRSTEN, Ulrich**
**Eichenweg 1**
**W-7016 Gerlingen (DE)**
Erfinder: **LEISNER, Ernst**
**Wettertalstr. 42**
**W-7257 Ditzingen (DE)**

## Beschreibung

### Stand der Technik

Die Erfindung geht aus von einem Roboterarm mit einem Anbauflansch für Werkzeuge nach der Gattung des Hauptanspruchs. Bei bekannten Roboterarm en dieser Gattung (EP-A-0 154 277 oder DE-A1 33 40 912) ist der Anbauflansch als tragendes Grundelement eines Greiferwechselsystems ausgebildet, welches in Bezug auf die mechanischen Zentrier- und Befestigungsmittel sowie auf die Leitungsanschlüsse für Energieversorgung und Steuergung auf die in diesem System verwendeten Greiferwerkzeuge abgestimmt ist und daher einem Teil einer Sonderbaugruppe bildet, die für den Anbau anderer Werkzeuge nicht geeignet ist.

### Vorteile der Erfindung

Die erfindungsgemäße Anordnung mit den kennzeichnenden Merkmalen des Hauptanspruchs hat demgegenüber den Vorteil, daß der Anbauflansch für verschiedene Einsatzfälle des Roboterarmes mit unterschieldlich konzipierten Werkzeugen und Werkzeugwechselsystemen verbindbar ist, wobei die Anpassung lediglich durch Austauch standardisierter, steckbarer Bau- und Leitungselemente erfolgt. Der erfindungsgemäße Anbauflansch zeichnet sich ferner durch einen modularen, kompakten und servicefreundlichen Aufbau aus.

Durch die in den Unteransprüchen angegebenen Maßnahmen sind vorteilhafte Weiterbildungen der Anordnung nach dem Hauptanspruch möglich.

Bei Roboterarmen mit Druckmittelanschlüssen für die Energieversorgung der anbaubaren Werkzeuge wird vorgeschlagen, daß eine Deckelplatte innen mit einem gemeinsamen Druckmittelanschluß für mehrere weiterführende Druckmittel-Leitungsabschnitte versehen ist, die über Druckmittelventile führen, welche außen an der Deckelplatte befestigt und über einen Verteilerkanal in der Deckelplatte mit dem innenliegenden Druckmittelanschluß verbunden sind. Dadurch ist erreicht, daß bis zum Anbauflansch nur eine einzige Druckmittelleitung vorzusehen ist und die Druckmittelventile direkt am Verbraucher angeordnet sind, wodurch sich kurze Taktzeiten ergeben.

Eine einfache und stabile Ausführung des den Anbauflansch bildenden Gehäusekörpers ergibt sich, wenn dieser durch einen Längsabschnitt eines gezogenen Profils mit rahmenartigem Rechteckquerschnitt gebilder ist.

### Zeichnung

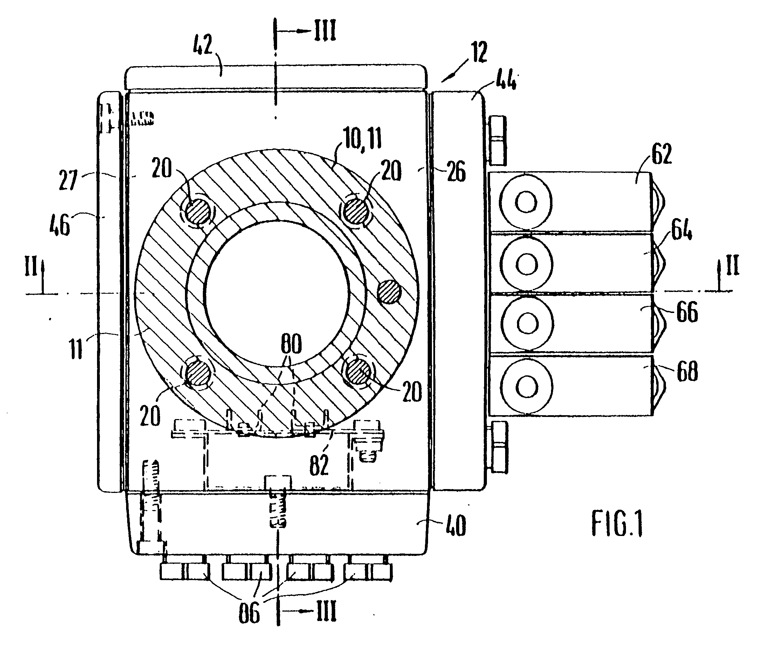

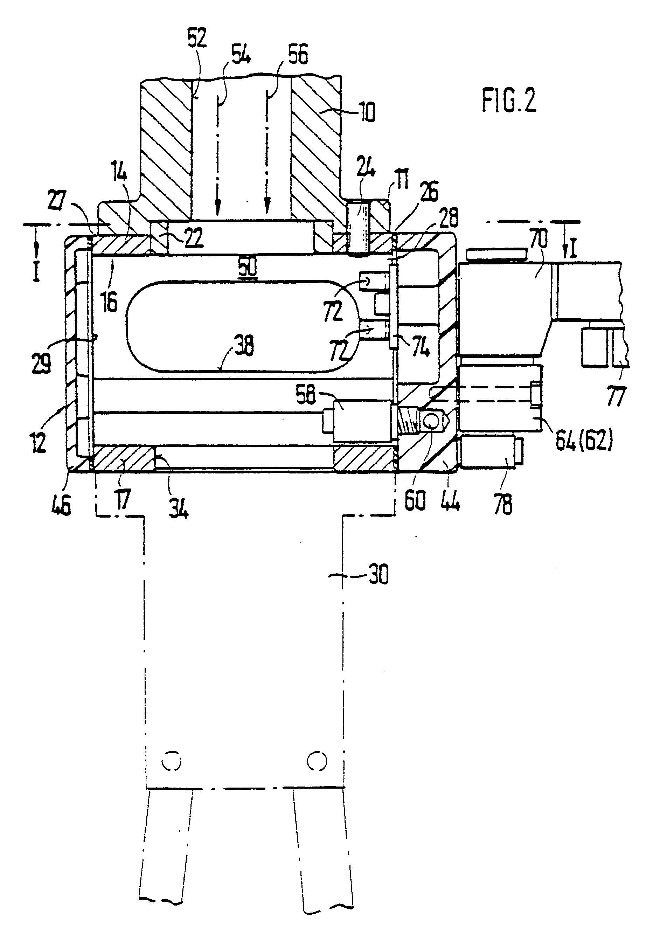

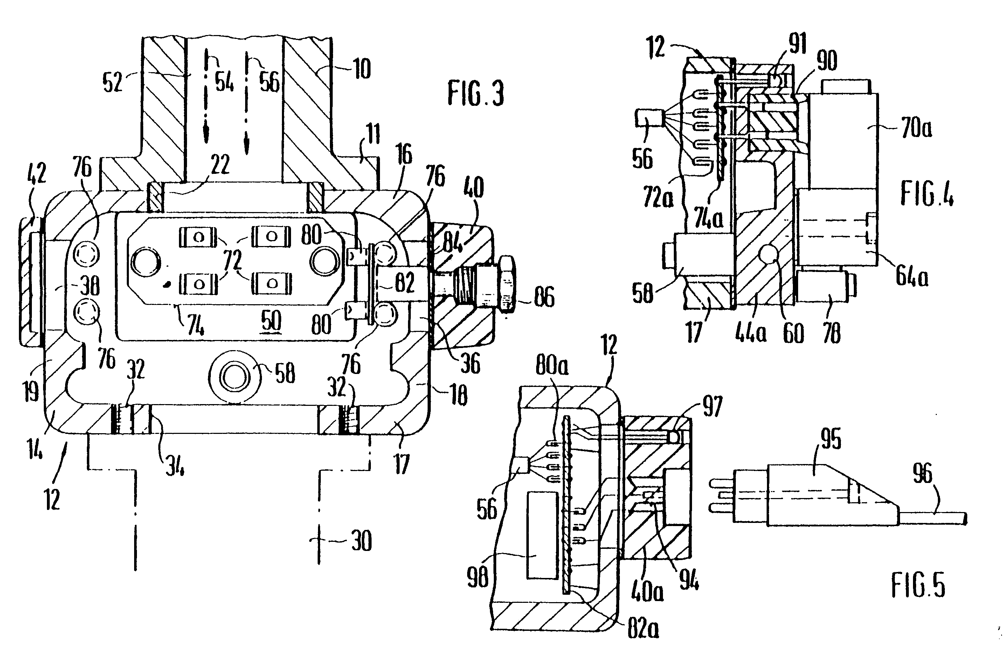

Ein Ausführungsbeispiel der Erfindung ist in der Zeichnung dargestellt und in der nachfolgenden Beschreibung näher erläutert. Es zeigen Figur 1 einen Querschnitt durch den Roboterarm nach der Linie I-I in Figur 2, und die Figuren 2 und 3 je einen Teil-Längsschnitt nach den Linien II-II bzw. III-III in Figur 1. Die Figur 4 zeigt eine Variante einer aus Figur 2 ersichtlichen Einzelheit des Ausführungsbeispiels und die Figur 5 eine Variante einer aus Figur 3 ersichtlichen Einzelheit.

### Beschreibung des Ausführungsbeispiels

Am freien Ende eines Roboterarmes 10 ist ein Flansch 11 gebildet, an welchem eine als Ganzes mit der Bezugszahl 12 bezeichnete Gehäusebaugruppe befestigt ist. Diese hat als Grundelement einen Gehäusekörper 14, der durch einen Längsabschnitt eines gezogenen Profils gebildet ist, das einen rahmenartigen Rechteckquerschnitt hat. Der Gehäusekörper 14 hat demzufolge eine Deckwand 16 (Figur 2), eine Bodenwand 17 und zwei Seitenwände 18, 19 (Figur 3), die sich paarweise parallel gegenüberliegen. Die Deckwand 16 ist am Flansch 11 durch Schrauben 20 befestigt und gegenüber dem Flansch 11 durch einem Ringbund 22 und einen Stift 24 in der vorschriftsmäßigen Lage fixiert. An den beiden anderen, quer zur Ziehrichtung des Profils liegenden Seiten 26, 27 ist der Gehäusekörper 14 offen, d.h. mit Öffnungen 28, 29 versehen, die dem lichten Querschnittsprofil des gezogenen Gehäusekörpers 14 entsprechen.

Die Bodenwand 17 des Gehäusekörpers 14 bildet einen Anbauflansch für ein angedeutetes Werkzeug 30 oder für ein Grundelement eines Werkzeugwechselsystems. Die Bodenwand 17 ist zu diesem Zweck mit vier Gewindebohrungen 32, einer Zentrieröffnung 34 und mit weiteren, in der Zeichnung nicht sichtbaren Mitteln zum winkelgerechten Fixieren des angebauten Werkzeugs versehen. In den senkrecht stehenden Seitenwänden 18 und 19 des Gehäusekörpers sind Durchbrüche 36 und 38 vorgesehen (Figur 3), die durch Deckelplatten 40 und 42 jeweils unter Zwischenlage einer Dichtung nach außen abgeschlossen sind. Die vom Profil her offenen Seiten 26, 27 des Gehäusekörpers 14 sind durch Deckelplatten 44, 46 (Figur 2) jeweils unter Zwischenlage einer Dichtung nach außen verschlossen.

Durch die beschriebene Anordnung ergibt sich ein geschlossener Innenraum 50 im Gehäusekörper 14, in den eine zentrale Bohrung 52 im Roboterarm 10 hineinführt. In der Bohrung 52 verläuft eine symbolisch durch eine strichpunktierte Linie angedeutete Druckmittel-Leitung 54 zur Energieversorgung und ein angedeutetes Bündel 56 elektrischer Leitungen zur Steuerung des angebauten Werkzeugs bzw. Werkzeugwechselsystems. Die Druckmittel-Leitung 54 führt zu einem inneren Druckmittelanschluß 58 (Figur 2) an der Deckelplatte 44, der über ein verzweigtes Kanalsystem 60 in der Deckelplatte 44 mit den Eingängen von vier Druckmittelventilen 62, 64, 66, 68 verbunden ist, welche an der Deckelplatte 44 außen befestigt sind.

Die Druckmittelventile 62 bis 68 haben je einen elektromagnetischen Antrieb 70 (Figur 2), der über eine der elektrischen Leitungen aus dem Bündel 56 angesteuert bzw. gespeist ist. Diese Leitungen führen zunächst zu elektrischen Kontaktstecklaschen 72 auf einer Isolierplatte 74, welche an der Deckelplatte 44 innen befestigt ist. An die Kontaktstecklaschen 72 sind ferner weiterführende Leitungen angeschlossen, die isoliert und zugentlastet durch Bohrungen 76 in der Deckelplatte 44 hindurchgeführt und an Anschlußkontakte 77 der Antriebe 70 angeschlossen sind. Die Druckmittelventile 62 bis 68 haben je einen externen Druckmittelanschluß 78, an die energieübertragende Druckmittel-Leitungen angeschlossen sind, welche zu dem angebauten Werkzeug bzw. Werkzeugwechselsystem führen. Die übrigen elektrischen Leitungen aus dem Bündel 56 sind zu elektrischen Kontaktstecklaschen 80 auf einer Isolierplatte 82 geführt, welche über Stage 84 mit der Deckelplatte 40 verbunden ist. Diese besteht aus Isoliermaterial und trägt außen vier elektrische Anschlußkontakte 86, die einzeln über nicht dargestellte Leitungsstücke mit den inneren Kontaktstacklaschen 80 verbunden sind. An die externen Anschlußkontakte 86 sind die zum angebauten Werkzeug bzw. Werkzeugwechselsystem weiterführenden Steuerleitungen angeschlossen. Die beiden Deckelplatten 42 und 46 haben beim beschriebenen Ausführungsbeispiel nur eine Schutzfunktion für die im Innenraum 50 des Gehäusekörpers 14 liegenden elektrischen Kontaktanschlüsse.

Bei der Variante nach Figur 4 ist eine Deckelplatte 44a vorgesehen, die ebenfalls innen einen Druckmittelanschluß 58 und außen mehrere Druckmittelventile 64a trägt, die an ein verzweigtes Kanalsystem 60 in der Deckelplatte 44a angeschlossen sind. Die Druckmittelventile 64a haben je einen elektrischen Antrieb 70a, von denen ein jeder über eine Steckvorrichtung, die ein in die Deckelplatte 44a intergriertes Steckelement 90 hat, mit Kontakten 72a einer Leiterplatte 74a verbunden ist, an die Leitungen aus dem Bündel 56 angeschlossen sind. Jedem Steckelement 90 ist eine LED-Anzeige 91 zugeordnet, die ebenfalls in die Deckelplatte 44a integriert und über die Leiterplatte 74a kontaktiert ist.

Bei der Variante nach Figur 5 sind in eine Deckelplatte 40a mehrere Steckelemente 94 für Stecker 95 von weiterführenden Signal- und Steuerleitungen 96 integriert, die über eine Leiterplatte 82a und daran befestigten Kontakten 80a mit Leitungen aus dem Bündel 56 kontaktiert sind. Jedem Steckelement 94 ist eine LED-Anzeige 97 zugeordnet, die ebenfalls in die Deckelplatte 40a integriert und über die Leiterplatte 82a kontaktiert ist.

Sowohl bei einer Ausführung mit durchgeführten Leitungen nach den Figuren 2 und 3, als auch bei einer Ausführung mit gesteckten Leitungen nach den Figuren 4 und 5 können an die Deckelplatte 44, 44a, bzw. 40, 40a bzw. an die daran befestigte Isolierstoffplatte 74, 82 bzw. Leiterplatte 74a, 82a elektronische Bauelemente bzw. Baugruppen, z.B. A/D-Wandler, Meßumformer und -verstärkar, Grenzwächter usw. zur Prozeßüberwachung bzw. -steuerung der angeschlossenen Werkzeuge und Vorrichtungen angebaut sein, In Figur 5 ist ein an die Leiterplatte 82a angestecktes derartiges Bauelement 98 symbolisch dargestellt. Ferner können die Leiterplatten 74a, 82a, die Isolierplatten 74, 82 oder die sie tragenden Deckelplatten 44a, 40a bzw. 44, 40 auch mit Steckverbindern für optische bzw. optisch-elektrische Übertragungsleitungen, oder für opto-elektronische und elektro-optische Wandler versehen sein.

Die in Modulbauweise konzipierte Gehäusebaugruppe 12 des Roboterarmes 10 kann durch Auswechseln der Deckelplatten 40 bis 46 bzw. 40a und 44a leicht an den jeweiligen Anwendungsfall angepaßt werden. Der pneumatische und elektrische Anschluß der Gehäusebaugruppe 12 an den Roboterarm 10 erfolgt über standardisierte, steckbare Leitungen mit minimierter Anzahl von Einzeladern, wobei die Verteilung und Verzweigung auf den Leiterplatten erfolgt. durch die guten Abdichmöglichkeiten ergibt sich eine hohe elektrische Schutzart (IP54). Die einzelnen Druckmittelventile sind im Bedarfsfall leicht austauschbar und durch ihre Anordnung direkt am Verbraucher ergeben sich kurze Taktzeiten.

## Patentansprüche

1. An einem Roboterarm angebrachter Anbauflansch für Werkzeuge, der mit Mitteln zum Zentrieren und Befestigen der Werkzeuge sowie mit Anschlüssen für deren Energieversorgung und Steuerung versehen und durch einen am Roboterflansch befestigten Gehäusekörper gebildet ist, in dessen Innenraum robotorarmseitige Leitungsabschnitte für die Energieversorgung und Steuerung hineingeführt sind und der an den Seiten Öffnungen hat, wobei der Anbauflansch mit inneren Anschlüssen für die roboterarmseitigen Leitungsabschnitte und außerdem mit Mitteln zum Verbinden der inneren Anschlüsse mit außerhalb des Gehäusekörpers angeordneten,, weiterführenden Steuer- und Signal-leitungen versehen ist, wobei die Öffnungen (36, 38, 28, 29) des Gehäusekörpers (14) mit diese umgebenden Anbauflächen für Deckelplatten (40, 40a, 42, 44, 44a, 16) versehen sind, und in mindestens einer Deckelplatte Steckelemente (90, 94) für an die Platte angebaute, elektrisch betätigbare Steuerelemente (62 bis 68, 64a) integriert sind, dadurch gekennzeichnet, daß die Deckelplatte innen Anschlüsse (58, 72, 72a, 80, 80a, 82a) hat, welche die inneren Steckelemente mit den roboterarmseitigen Steuerleitungsabschnitten verbinden und daß mindestens an einer Deckelplatte (44, 44a, 40, 40a) ein elektronisches Bauelement (91, 92, 98) bzw. eine elektronische Baugruppe zur Prozeßüberwachung bzw. -Steuerung befestigt ist.

2. Anbauflansch nach Anspruch 1 mit Druckmittelanschlüssen für die Energieversorgung des anbaubaren Werkzeugs, dadurch gekennzeichnet, daß eine Deckelplatte (44, 44a) innen mit einem gemeinsamen Druckmittelanschluß (58) für mehrere, weiterführende Druckmittel-Leitungsabschnitte versehen ist, die über die Steuerelemente bildenden Druckmittelventile (62 bis 68, 64a) führen, welche außen an der Deckelplatte (44, 44a) befestigt und über einen Verteilerkanal (60) in der Deckelplatte (44, 44a) mit dem inneren Druckmittelanschluß (58) verbunden sind.

3. Anbauflansch nach Anspruch 2, dadurch gekennzeichnet, daß die Druckmittelventile (62 bis 68, 64a) elektrisch betätigt sind und daß die sie tragende Deckelplatte (44, 44a) innen mit elektrischen Anschlußkontakten (72, 72a) versehen ist, welche die robotorarmseitigen Steuerleitungsabschnitte (56) und die durch die Deckelplatte (44, 44a) hindurch zu den außenliegenden elektrischen Ventilanschlüssen (77) weiterführenden Steuerleitungsabschnitte angeschlossen sind.

4. Anbauflansch nach einem der vorhergehenden Ansprüche, dadurch gekennzeichnet, daß der Gehäusekörper (14) durch einen Längenabschnitt eines gezogenen Profils mit rahmemförmigem Rechteckquerschnitt gebildet ist.

5. Anbauflansch nach einem der vorhergehenden Ansprüche, dadurch gekennzeichnet, daß an der Bodenwand (17) des Gehäusekörpers (14) ein Tragflansch eines Greiferwechselsystems befestigbar ist.

## Claims

1. Mounting flange for tools which is attached to a robot arm, is provided with means for centring and fastening the tools and with connections for their energy supply and control and is formed by a housing body fastened to the robot flange, into the interior of which housing body line sections for the energy supply and control are introduced on the side of the robot arm and which has openings at the sides, the mounting flange being provided with inner connections for the line sections on the side of the robot arm and, additionally, with means for joining the inner connections to further control and signal lines arranged outside the housing body, the openings (36, 38, 28, 29) of the housing body (14) being provided with mounting surfaces, surrounding said openings, for cover plates (40, 40a, 42, 44, 44a, 16), and plug-in elements (90, 94) for electrically actuable control elements (62 to 68, 64a) which are mounted on the plate being integrated in at least one cover plate, characterised in that the cover plate has connections (58, 72, 72a, 80, 80a, 82a) on the inside, which connections join the inner plug-in elements to the control line sections on the side of the robot arm, and in that an electronic component (91, 92, 98) or an electronic module is fastened at least to one cover plate (44, 44a, 40, 40a) for monitoring or controlling the process.

2. Mounting flange according to Claim 1, having pressure means connections for the energy supply of the mountable tool, characterised in that a cover plate (44, 44a) is provided on the inside with a common pressure means connection (58) for a plurality of further pressure means line sections which pass via the pressure means valves (62 to 68, 64a) forming control elements, which pressure means valves are fastened to the outside of the cover plate (44, 44a) and are joined to the inner pressure means connection (58) via a distributor channel (60) in the cover plate (44, 44a).

3. Mounting flange according to Claim 2, characterised in that the pressure means valves (62 to 68, 64a) are actuated electrically, and in that the cover plate (44, 44a) bearing them is provided on the inside with electric connection contacts (72, 72a), [lacuna] which the control line sections (56) on the side of the robot arm and the further control line sections leading through the cover plate (44, 44a) to the outlying electric valve connections (77) are connected.

4. Mounting flange according to one of the preceding claims, characterised in that the housing body (14) is formed by a longitudinal section of a drawn profile having a frame-shaped rectangular cross-section.

5. Mounting flange according to one of the preceding claims, characterised in that a bearing flange of a gripper exchange system can be fastened to the bottom wall (17) of the housing body (14).

## Revendications

1. Bride de montage pour outils appliquée sur un bras de robot, munie de moyens pour centrer et fixer les outils, ainsi que de raccords pour son besoin d'énergie et sa commande, est constituée d'un corps de bâti fixé à la bride du robot, à l'intérieur duquel des tronçons de lignes électriques du côté du bras de robot sont introduits pour le besoin d'énergie et la commande et qui a des ouvertures sur les côtés, dans lequel la bride de montage est munie de raccords intérieurs pour les tronçons de lignes du côté du bras de robot et, en outre, de moyens pour relier ces tronçons intérieurs aux lignes électriques de commande et de signaux placées à l'extérieur du corps de bâti et continuant plus loin, les ouvertures (36, 38, 28, 29) du corps de bâti (14) étant munies de brides de montage les entourant pour des plaques de recouvrement (40, 40a, 42, 44, 44a, 16) et des éléments enfichables (90, 94) étant intégrés dans au moins une plaque de recouvrement pour des éléments de commande (62 à 68, 64a) montés sur la plaque, actionnables électriquement, caractérisée en ce que la plaque de recouvrement a intérieurement des raccords (58, 72, 72a, 80, 80a, 82a), qui relient les éléments enfichables intérieurs aux tronçons de lignes de commande du côté du bras de robot, et en ce qu'au moins un élément de construction électronique (91, 92, 98) ou un bloc électronique pour le contrôle et la commande du procédé est fixé sur une plaque de recouvrement (44, 44a, 40, 40a).

2. Bride de montage selon la revendication 1, avec des raccords pour agent de pression pour le besoin en énergie de l'outil monté, caractérisée en ce qu'une plaque de recouvrement (44, 44a) est munie intérieurement d'un raccord pour un agent de pression (58) commun pour plusieurs tronçons de conduites de moyens de pression continuants, qui traversent les vannes d'agent de pression (62 à 68, 64a) constituant les éléments de commande, vannes qui sont fixées extérieurement sur la plaque de recouvrement (44, 44a) et sont reliées par un canal distributeur (60) dans la plaque de recouvrement (44, 44a) au raccord intérieur d'agent de pression (58).

3. Bride de montage selon la revendication 2, caractérisée en ce que les vannes d'agent de pression (62 à 68, 64a) sont actionnées électriquement et en ce que la plaque de recouvrement (44, 44a) les supportant est munie intérieurement de raccords de contact électriques (72, 72a), qui sont reliés aux tronçons de ligne de commande (56) du côté du bras de robot et aux tronçons de ligne de commande se continuant à travers la plaque de recouvrement (44, 44a) vers les raccords de vannes électriques (77) situés à l'extérieur.

4. Bride de montage selon une des revendications précédentes, caractérisée en ce que, le corps de bâti (14) est formé par un segment en longueur d'un profilé étiré avec une section rectangulaire en forme de cadre.

5. Bride de montage selon une des revendications précédentes, caractérisée en ce que sur la paroi du fond (17) du corps de bâti (14) on peut fixer une bride de support d'un système interchangeable de prise.

FIG.1

FIG.2

FIG.3

FIG.4

FIG.5

EP 0 256 038 B1